# EUROPÄISCHE PATENTANMELDUNG

(11) **EP 4 682 751 A1**
(43) Veröffentlichungstag der Anmeldung: **21.01.2026**
(21) Anmeldenummer: 24189522.6
(22) Anmeldetag: 18.07.2024
(51) Int. Cl.: G06F 21/57, H04L 9/32

(54) **VERFAHREN UND VORRICHTUNG ZUR INTEGRITÄTSPRÜFUNG EINER AUSFÜHRBAREN FUNKTION EINER GERÄTEINHEIT**

(71) Anmelder: Siemens Aktiengesellschaft, 80333 München (DE)
(72) Erfinder: PICCOLI, Alessandro, 80333 München (DE); SAFIEH, Malek Dr., 81539 München (DE); AGHAIE, Anita Dr., 81379 Munich (DE); FISCHER, Kai, 85598 Baldham (DE); BUDAK, Utku, 81927 München (DE)
(74) Vertreter: Siemens Patent Attorneys

(57) **Zusammenfassung**

Die vorliegende Offenbarung betrifft ein Verfahren und eine Vorrichtung zur Integritätsprüfung einer ausführbaren Funktion eines Gerätes. Das offenbarungsgemäße Verfahren umfasst mehre Verfahrensschritte. Es erfolgt ein Ausführen einer OWF-Rechenfunktion, OWF_R, bei einem betriebsbedingten Starten des Gerätes, insbesondere in einer Betriebs-/Anwendungsphase, wobei die ausführbare Funktion in eine Vielzahl an Boot-Schichten unterteilt wird, und wobei ein einzigartiges Gerätegeheimnis, UDS, aus einer Speichervorrichtung gelesen und als Eingabe für die OWF-Rechenfunktion verwendet wird, um zwei Ergebniswerte zu erzeugen: 1) einen ersten Ergebniswert für eine Schlüsselkette, CDI0, und 2) einen zweiten Ergebniswert für eine sichere Boot-Verifizierungskette, CDI_sec0. Es erfolgt ein Ermitteln eines symmetrischen Berechtigungsnachweises, CDI_K0, durch ein Ausführen einer Schlüsselableitungsfunktion, KDF, insbesondere einer DICE-Schlüsselableitungsfunktion, auf der Grundlage des zweiten Wertes und ein Verwenden des symmetrischen Berechtigungsnachweises zur Prüfung der Integrität einer ersten Boot-Schicht der ausführbaren Funktion durch Berechnung eines Integritätsprüfwertes, ICV_check, wobei der ICV_check mit einem Integritätsreferenzwertes, ICV_ref, verglichen wird und bei einer Übereinstimmung eine weitere Boot-Schicht zur Prüfung geladen wird, andernfalls ein fehlerbehaftetes Ergebnis für die Integrationsprüfung bereitgestellt wird.

## Beschreibung

Die vorliegende Offenbarung betrifft ein Verfahren zur Integritätsprüfung einer ausführbaren Funktion einer Geräteinheit und eine Vorrichtung zur Integritätsprüfung einer ausführbaren Funktion einer Geräteinheit. Zusätzlich oder alternativ wird ein Computerprogramm bereitgestellt, das Befehle umfasst, die bei der Ausführung des Programms durch einen Computer diesen dazu veranlassen, das Verfahren zumindest teilweise auszuführen.

Eine Boot-Phase eines Geräts kann entscheidend für die korrekte Initialisierung und den Start einer Gerätefunktionen des Geräts sein. Beispielsweise können die Hardwareschnittstellen für die Ein- und Ausgabe initialisiert werden, und die Gerätesoftware kann gestartet werden. Diese Phase ist jedoch nicht nur aus funktionaler Sicht entscheidend, sondern auch aus Sicherheitsgründen. Wenn ein Gerät manipulierte Software ausführt, kann sich nicht mehr darauf verlassen werden, dass es wie vorgesehen funktioniert und/oder die Gerätefunktionen wie vorgesehen ausgeführt werden, und es sollte als eine Bedrohung für weitere in dem gleichen Netz befindliche Geräte angesehen werden.

Um sicherzustellen, dass auf den Geräten nur die vorgesehene Software ausgeführt wird, sind verschiedene Technologien entwickelt worden und bekannt. Eine verbreitete Technik ist das so genannte "sichere Booten (engl. Secure Boot)", das darin besteht, die Integrität der gebooteten Software vor ihrer Ausführung zu überprüfen und den Prozess im Falle einer Nichtübereinstimmung zu beenden. Beim sicheren Booten werden die Softwarephasen mit vertrauenswürdigen Schlüsseln digital signiert, und die Signaturen werden beim Booten überprüft. Für eine Implementierung des Sicheren Booten wird in der Regel asymmetrische Kryptografie verwendet (z. B. UEFI Secure Boot). Dies ermöglicht es Softwareentwicklern, Software (z. B. Bootloader, Betriebssystem usw.) zu verteilen, die von mehreren Parteien überprüft werden kann, ohne dass mehrere symmetrische Schlüssel ausgehandelt werden müssen. Dies stellt jedoch eine Einschränkung für Geräte mit eingeschränkten Möglichkeiten dar, da sie aufgrund von Ressourcenbeschränkungen möglicherweise nicht in der Lage sind, asymmetrische Kryptografieoperationen effizient auszuführen.

Eine weitere im Stand der Technik bekannte Umsetzung ist das "gemessene Booten (engl. Measured Boot)". In diesem Fall wird die Integrität der Software nicht vor der Ausführung überprüft und der Bootvorgang nicht beendet, sondern es wird eine Messung des Softwarestadiums (z. B. ein Hash-Wert) berechnet. Der ermittelte Messwert kann einem externen Prüfer (Verifizierer) zur Verfügung gestellt werden, der die Integrität der gebooteten Software nachweisen kann. Eine Implementierungstechnologie für gemessenes Booten ist die "Device Identifier Composition Engine (DICE)".

Mit DICE können die Software-Messungen als Input für die kryptografische Schlüsselgenerierung verwendet werden. Ein DICE-fähiges Gerät kann das generierte Schlüsselmaterial für Sicherheitsfunktionen wie kryptografische Protokolle, sichere Kommunikation oder sichere Speicherung verwenden. Läuft auf dem Gerät manipulierte Software, ist das Schlüsselmaterial ein anderes, und die Sicherheitsfunktionen würden nicht mehr korrekt ausgeführt. In diesem Fall würden zum Beispiel andere Kommunikationspartner oder Peers dem Gerät nicht mehr vertrauen. Schließlich erfordert DICE nur sehr geringe Rechenkapazitäten, womit es für Geräte mit eingeschränkten Möglichkeiten eingesetzt werden kann.

Die DICE-Kette ist ein Sicherheitsmechanismus für den Boot-Prozess eines Geräts, bei dem jede Schicht des Boot-Prozesses kryptografisch gemessen wird, bevor die nächste Schicht gestartet wird. Dies bedeutet, dass jede Schicht der Boot-Kette in der vorherigen Schicht gemessen, um zusätzliche Sicherheit zu gewährleisten. Der Schlüssel, der am Ende des DICE-Boot-Prozesses resultiert, kann dann für verschiedene Sicherheitsfunktionen verwendet werden, um die Integrität und Authentizität des Systems zu bestätigen.

Ein Nachteil der DICE-Kette ist jedoch, dass jede Schicht der Boot-Kette nur eine einzige Messung erlaubt, was die Flexibilität für verschiedene Anwendungen einschränken kann. Zudem spezifizieren die aktuellen DICE-Konzepte nicht, wie Fehlerfälle behandelt werden sollen oder was zu tun ist, wenn der gemessene Boot-Prozess nicht korrekt funktioniert.

Vor dem Hintergrund dieses Standes der Technik besteht die Aufgabe der vorliegenden Offenbarung darin, ein Verfahren und/oder eine Vorrichtung anzugeben, die zur Ausführung eines sicheren Bootvorgangs mit geringeren Rechenaufwand geeignet sind und eine sichere Bootlösung bereitstellen, um somit den Stand der Technik zu bereichern.

Gelöst wird die Aufgabe durch die Merkmale des unabhängigen Anspruchs. Die nebengeordneten Ansprüche und die Unteransprüche haben jeweils optionale Weiterbildungen der Offenbarung zum Inhalt.

Danach wird die Aufgabe durch ein Verfahren zur Integritätsprüfung einer ausführbaren Funktion einer Geräteinheit gelöst. Das Verfahren zur Integritätsprüfung kann mehrere Verfahrensschritte aufweisen. Im Sinne der vorliegenden Offenbarung ist eine Integritätsprüfung ein Prozess, der sicherstellen kann, dass Daten oder Programme oder Firmware oder Software unverändert und korrekt sind. Dies kann durch den Einsatz kryptografischer Methoden wie Hash-Funktionen oder HMAC (Hash-based Message Authentication Code) erreicht werden. Im Sinne der vorliegenden Offenbarung ist eine ausführbare Funktion eine Software, Programm, Firmware, Daten und/oder Teile der genannten, die auf der Geräteinheit in einer Speichervorrichtung speicherbar sind und durch eine Prozessoreinheit der Geräteinheit gelesen, verarbeitet und/oder verändert werden können.

Die offenbarungsgemäße Geräteinheit, nachfolgend auch kur als Gerät bezeichnet, ist eine physische Einheit, die eine oder mehrere spezifische Funktionen ausführen kann und dabei verschiedene elektronische, mechanische oder softwarebasierte Komponenten integriert. Das Gerät kann Daten empfangen, verarbeiten, speichern und übertragen. Das Gerät kann sowohl in alltäglichen Anwendungen als auch in spezialisierten industriellen und wissenschaftlichen Bereichen eingesetzt werden.

In einem ersten Schritt erfolgt ein Ausführen einer OWF-Rechenfunktion, OWF_R, bei einem betriebsbedingten Starten des Gerätes, insbesondere in einer Betriebs-/Anwendungsphase. OWF steht dabei für "One-Way Function". Die ausführbare Funktion wird in eine Vielzahl an Boot-Schichten unterteilt. Ein einzigartiges Gerätegeheimnis, UDS, wird aus einer Speichervorrichtung gelesen und als Eingabe für die OWF-Rechenfunktion verwendet, um zwei Ergebniswerte zu erzeugen: 1) einen ersten Ergebniswert für eine Schlüsselkette, CDI0, und 2) einen zweiten Ergebniswert für eine sichere Boot-Verifizierungskette, CDI_sec0. Eine Speichervorrichtung ist eine elektronische Komponente oder ein Gerät, das Daten und Informationen in digitaler Form speichert und abrufen kann. Die Speichervorrichtung kann als eine flüchtige oder nicht-flüchtige Speichervorrichtung ausgebildet sein, wobei flüchtige Speichervorrichtungen Daten nur vorübergehend halten und nicht-flüchtige Speichervorrichtungen Daten auch ohne Stromzufuhr dauerhaft speichern. Sie können zur Speicherung von Programmen, Betriebssystemen, Benutzerdaten und anderen wichtigen Informationen in Computern und elektronischen Geräten verwendet werden.

Durch ein Ausführen der OWF-Rechenfunktion beim betriebsbedingten Starten des Gerätes, insbesondere in der Betriebs-/Anwendungsphase, kann eine sichere und zuverlässige Initialisierung der Gerätefunktionen gewährleistet werden. Die Aufteilung der ausführbaren Funktion in eine Vielzahl an Boot-Schichten kann die Modularität und Flexibilität des Bootprozesses erhöhen, wodurch jede Schicht unabhängig verifiziert und gesichert werden kann. Die Verwendung eines einzigartigen Gerätegeheimnisses (UDS), das aus einer Speichervorrichtung gelesen wird, um als Eingabe für die OWF-Rechenfunktion zu dienen, kann die Sicherheit des Gerätes steigern. Dies liegt daran, dass das UDS spezifisch für jedes Gerät ist und somit einzigartige Schlüssel generiert werden können, die für die Verifizierung und Sicherung der Boot-Schichten verwendet werden. Durch die Erzeugung von zwei Ergebniswerten - einem ersten Ergebniswert für eine Schlüsselkette (CDI0) und einem zweiten Ergebniswert für eine sichere Boot-Verifizierungskette (CDI_sec0) kann eine zusätzliche Sicherheitsebene eingeführt werden. CDI0 kann zur Weitergabe an die nächste Boot-Schicht verwendet werden, während CDI_sec0 innerhalb der aktuellen Schicht belassen wird, um die Integrität der Software in dieser Schicht zu verifizieren. Diese Trennung der Ergebniswerte kann die Robustheit gegen Manipulationen erhöhen, da ein Angreifer nicht in der Lage wäre, beide Werte zu kompromittieren, ohne das gesamte Gerät zu gefährden.

Eine OWF-Rechenfunktion im Sinne der vorliegenden Offenbarung ist eine mathematische Funktion, die eine Eingabe derart transformiert, sodass es einfach ist, das Ergebnis zu berechnen, aber schwierig ist, die ursprüngliche Eingabe aus dem Ergebnis zurückzugewinnen. Die OWF-Rechenfunktion kann als Grundlage für die Erzeugung kryptografischer Schlüssel, Hash-Werte oder anderer sicherheitsrelevanter Informationen dienen. Beispielsweise können die OWF als Basis für die Schlüsselableitung verwendet werden. Die Schlüsselableitung erfolgt dann durch eine Key Derivation Function (KDF). Zusätzlich oder alternativ kann die OWF-Rechenfunktion in einem sicheren Bootprozess verwendet werden, um aus einem einzigartigen Gerätegeheimnis (UDS) kryptografische Schlüssel abzuleiten, die für die Verifizierung der Integrität der Software (ausführbare Funktion) in verschiedenen Boot-Schichten genutzt werden. Eine bekannte OWF-Rechenfunktion ist die Hash-Funktion, wie SHA-256. Diese Funktion kann eine beliebige Eingabe in einen festen Ausgabewert transformieren, wobei jede kleine Änderung in der Eingabe zu einer drastischen Veränderung der Ausgabe führt, was Rückschlüsse auf die ursprüngliche Eingabe praktisch unmöglich macht.

In einem weiteren Schritt erfolgt ein Ermitteln eines symmetrischen Berechtigungsnachweises, CDI_K0, durch ein Ausführen einer Schlüsselableitungsfunktion, KDF, insbesondere einer DICE-Schlüsselableitungsfunktion, auf der Grundlage des zweiten Wertes. Durch das Ausführen der Schlüsselableitungsfunktion, insbesondere einer DICE-Schlüsselableitungsfunktion, kann eine sichere und effiziente Generierung von kryptografischen Schlüsseln gewährleistet werden, die zur Verifizierung der Integrität von Boot-Schichten verwendet werden können.

Durch die Schlüsselableitungsfunktion kann eine sichere Transformation des zweiten Wertes, CDI_sec0, in einen symmetrischen Berechtigungsnachweis (CDI_K0) erfolgen. Dieser Prozess kann sicherstellen, dass der resultierende Schlüssel nur von Berechtigten und nur bei Kenntnis des ursprünglichen Geheimnisses und des spezifischen Wertes erzeugt werden kann. Dies erhöht die Sicherheit des Gerätes, da ein Angreifer ohne Kenntnis des spezifischen zweiten Wertes und des Geräteschlüssels keinen gültigen symmetrischen Berechtigungsnachweis generieren kann. Durch die Verwendung der symmetrischen DICE-Schlüsselableitungsfunktion kann zusätzlich sichergestellt werden, dass der Schlüsselableitungsprozess ressourcenschonend und effizient abläuft, was insbesondere für Geräte mit begrenzten Rechenkapazitäten von Vorteil ist. Dies kann die Implementierung von sicheren Boot-Prozessen auch in kostengünstigen oder ressourcenbeschränkten Geräten ermöglichen, wie sie häufig in loT-Anwendungen oder in sicherheitskritischen Bereichen wie industriellen Steuerungen und medizinischen Geräten zu finden sind.

In einem weiteren Schritt erfolgt ein Verwenden des symmetrischen Berechtigungsnachweises zur Prüfung der Integrität einer ersten Boot-Schicht der ausführbaren Funktion durch Berechnung eines Integritätsprüfwertes, ICV_check, wobei der ICV_check mit einem Integritätsreferenzwertes, ICV_ref, verglichen wird und bei einer Übereinstimmung eine weitere Boot-Schicht zur Prüfung geladen wird, andernfalls ein fehlerbehaftetes Ergebnis für die Integrationsprüfung bereitgestellt wird. Durch die Berechnung eines Integritätsprüfwertes (ICV_check) und dessen Vergleich mit einem gespeicherten Integritätsreferenzwert (ICV_ref) kann die Integrität und Authentizität der Software in der nächsten Boot-Schicht sichergestellt werden bzw. kann die erste Boot-Schicht (n) die Integrität und Authentizität der Software in der nächsten oder nachfolgenden Boot-Schicht (n+1) sicherstellen. Diese Vorgehensweise kann verhindern, dass manipulierte oder unautorisierte Software ausgeführt wird, was die Sicherheit und Zuverlässigkeit des Gerätes erhöhen können.

Die Bereitstellung eines symmetrischen Berechtigungsnachweises (CDI_K0) für die Berechnung des ICV_check kann es ermöglichen, dass der Integritätsprüfwert effizient und sicher ermittelt wird. Dies kann besonders vorteilhaft für ressourcenbeschränkte Geräte sein, da symmetrische Kryptografie weniger Rechenleistung und Speicherressourcen erfordert als asymmetrische Kryptografie.

Durch den Vergleich des ICV_check mit dem ICV_ref kann das Gerät eine klare Entscheidung treffen, ob die erste Boot-Schicht integer ist oder nicht. Bei einer Übereinstimmung kann die nächste Boot-Schicht zur Prüfung geladen werden, wodurch ein mehrstufiger Verifizierungsprozess implementiert wird. Dieser Prozess kann sicherstellen, dass jede Schicht der Boot-Software separat geprüft und verifiziert wird, bevor der gesamte Boot-Prozess abgeschlossen wird. Falls der ICV_check nicht mit dem ICV_ref übereinstimmt, kann ein fehlerbehaftetes Ergebnis für die Integritätsprüfung bereitgestellt werden. Dies kann es dem Gerät ermöglichen, den Boot-Vorgang zu stoppen oder eine Warnung auszugeben, um Benutzer oder Systeme über die potenzielle Gefahr einer manipulierten Software zu informieren. Dies kann die Gesamtsicherheit des Geräts erhöhen und schützt es vor möglichen Angriffen oder Fehlfunktionen.

Das oben beschriebene Verfahren bietet dabei eine Reihe von Vorteilen. Es wird eine zusätzliche Verifizierungssoftware ausgeführt wird, bevor die Kontrolle an die nächste Boot-Stufe übergeben wird. Es sind keine externen Zertifikate und kein externes Schlüsselmaterial erforderlich.

Ferner werden zum im Stand der Technik bekannten DICE auch Firmware-Updates und Änderungen für die Integritätswerte bzw. Schlüssel zur Berechnung der ICVs (Integritätsprüfwert, Integritätsreferenzwert) unterstützt.

Diese Idee unterscheidet sich zum Stand der Technik dahingehend, dass die Offenbarung zur Aktualisierung der Referenzwerte auf symmetrischer Kryptographie basiert. Eine symmetrische Schlüsselaktualisierung erfordert geringere Rechenkapazitäten und ermöglicht es eingeschränkten Geräten, die Referenzwerte während des Lebenszyklus des Geräts zu aktualisieren. Ferner ist keine Verschlüsselung der Referenzwerte erforderlich, was zu einem effizienteren und flexibleren Ansatz führt. Zudem werden keine mehreren Schlüsselketten zur Berechnung und zum Schutz der Integritätskennzeichen berücksichtigt, sondern nur eine Erweiterung der Haupt-DICE-Schlüsselkette. Ein weiterer Vorteil dieser Offenbarung liegt darin, dass die Speicherung des Referenzwertes als Teil der Bootschicht erfolgt.

Ferner wird die DICE-Architektur um sichere Boot-Funktionen erweitert. Dieser Mechanismus ermöglicht die Wiederverwendung des generierten DICE-Schlüsselmaterials, um eine geräteinterne Überprüfung des Software-Integritätsstatus vorzunehmen. Die interne Überprüfung ermöglicht es dem Gerät, eine Manipulation zu erkennen und die Ausführung zu stoppen oder eine Warnung auszugeben, bevor es zu einer Bedrohung für externe Geräte wird.

Ein weiterer Vorteil der Offenbarung besteht darin, dass sie Geräten mit eingeschränkten Möglichkeiten, die nicht in der Lage sind, standardmäßige sichere Boot-Technologien auszuführen, sichere Boot-Funktionen bietet.

Nachfolgend werden mögliche Weiterbildungen der oben beschriebenen Vorrichtung im Detail erläutert.

Es kann vorgesehen sein, dass zur Integrationsprüfung in einer Konfigurationsphase des Gerätes einmalig folgender Verfahrensschritt zum Ermitteln wenigstens eines Integritätsreferenzwertes für die auf dem Gerät ausführbare Funktion während eines erstmaligen Startens des Gerätes in der Konfigurationsphase ausgeführt wird. Hiermit kann sichergestellt werden, dass ein verlässlicher und vertrauenswürdiger Integritätsreferenzwert (ICV_ref) erstellt wird, bevor das Gerät in den regulären Betrieb übergeht. Durch die einmalige Generierung des ICV_ref in einer kontrollierten und sicheren Umgebung kann gewährleistet werden, dass die Referenzwerte nicht durch Manipulationen oder Fehler beeinträchtigt sind. Die Konfigurationsphase kann so gestaltet werden, dass das Gerät in einer vertrauenswürdigen Umgebung initialisiert wird, was die Sicherheit der generierten Integritätsreferenzwerte erhöht. Diese initialen ICV_ref-Werte können dann sicher auf dem Gerät gespeichert werden, insbesondere in einer Speichervorrichtung gespeichert werden, um später als Vergleichsgrundlage für die Integritätsprüfung während des normalen Betriebs zu dienen. Durch die einmalige Durchführung dieses Verfahrensschrittes in der Konfigurationsphase kann der gesamte Integritätsprüfungsprozess während des regulären Betriebs optimiert und beschleunigt werden, da die Referenzwerte bereits zuverlässig vorhanden sind. Dies kann die Effizienz des Boot-Prozesses verbessern und sicherstellen, dass jede Boot-Schicht schnell und zuverlässig auf ihre Integrität geprüft wird. Die Ermittlung der ICV_ref-Werte in einer sicheren Umgebung kann zudem das Vertrauen in die Integritätsprüfungsmechanismen des Gerätes erhöhen. Dies kann besonders wichtig für Anwendungen in sicherheitskritischen Bereichen wie der industriellen Automatisierung, der Medizintechnik oder in loT-Geräten sein, bei denen die Integrität und Sicherheit der Software von hoher Bedeutung ist.

Es kann vorgesehen sein, dass zur Integrationsprüfung in einer Konfigurationsphase des Gerätes einmalig folgender Verfahrensschritt zum Verknüpfen der Boot-Schichten der ausführbaren Funktion mit dem ermittelten Integritätsreferenzwert, um einen Integritätsstatus der ausführbaren Funktion bereitzustellen. Durch das Verknüpfen kann sichergestellt werden, dass jede Boot-Schicht zuverlässig und eindeutig einem bestimmten Integritätsreferenzwert (ICV_ref) zugeordnet ist, wodurch der Integritätsstatus der ausführbaren Funktion präzise ermittelt werden kann. Diese Vorgehensweise kann eine zuverlässige Grundlage für die spätere Integritätsprüfung während des normalen Betriebs des Gerätes schaffen. Indem die Boot-Schichten in der Konfigurationsphase einmalig mit dem ICV_ref verknüpft werden, kann das Gerät sicherstellen, dass die Integrität jeder Schicht bei jedem Start überprüft wird. Dies kann die Erkennung von Manipulationen oder unautorisierten Änderungen an der Software ermöglichen. Die Verknüpfung der Boot-Schichten mit dem ICV_ref kann auch die Effizienz des Integritätsprüfungsprozesses verbessern. Da die Referenzwerte bereits in der Konfigurationsphase festgelegt und gespeichert wurden, kann das Gerät beim Booten schnell auf diese Werte zugreifen und die Integrität der jeweiligen Boot-Schichten prüfen, ohne zusätzlichen Aufwand zur Ermittlung neuer Referenzwerte betreiben zu müssen.

Zudem kann diese Herangehensweise die Sicherheit des Gerätes erhöhen, indem sie eine konsistente und unveränderliche Basis für die Integritätsprüfung schafft. Jede Abweichung zwischen dem aktuell berechneten Integritätsprüfwert (ICV_check) und dem gespeicherten ICV_ref kann sofort erkannt und entsprechende Gegenmaßnahmen, wie das Stoppen des BootVorgangs oder das Ausgeben einer Warnung, eingeleitet werden. In sicherheitskritischen Anwendungen, wie der industriellen Automatisierung, der Medizintechnik oder in loT-Geräten, kann diese Verknüpfung von Vorteil sein, um die Integrität und Sicherheit der Software zu gewährleisten. Sie kann dazu beitragen, dass das Gerät nur autorisierte und unveränderte Software ausführt, was die Wahrscheinlichkeit von erfolgreichen Angriffen und Manipulationen verringert.

Es kann vorgesehen sein, dass die Konfigurationsphase in einer vertrauenswürdigen Umgebung ausgeführt wird. Die Durchführung dieser Phase in einer sicheren und kontrollierten Umgebung kann sicherstellen, dass alle sicherheitsrelevanten Vorgänge, wie die Generierung von Integritätsreferenzwerten (ICV_ref) und die Verknüpfung der Boot-Schichten mit diesen Werten, ohne das Risiko von Manipulationen oder unautorisierten Zugriffen stattfinden. Es kann die Integrität und Authentizität der generierten Referenzwerte garantiert werden. Dies kann sicherstellen, dass die ICV_ref-Werte, die als Basis für alle zukünftigen Integritätsprüfungen dienen, korrekt und unverändert sind. Somit kann das Gerät im regulären Betrieb zuverlässig feststellen, ob die Software unverändert und autorisiert ist. Die vertrauenswürdige Umgebung kann zudem gewährleisten, dass sensible Daten, wie das einzigartige Gerätegeheimnis (UDS) und die daraus abgeleiteten kryptografischen Schlüssel, während der Konfigurationsphase sicher gehandhabt und gespeichert werden. Dies kann die Sicherheit des gesamten Systems erhöhen, indem es das Risiko von Datenleacks oder unautorisierten Zugriffen minimiert. Indem die Konfigurationsphase in einer sicheren Umgebung stattfindet, kann ferner sichergestellt werden, dass alle erforderlichen Sicherheitsprotokolle und -verfahren ordnungsgemäß implementiert und überprüft werden. Dies kann dazu beitragen, potenzielle Sicherheitslücken oder Schwachstellen zu identifizieren und zu beheben, bevor das Gerät in den regulären Betrieb übergeht.

Es kann vorgesehen sein, dass die Betriebsphase in einer nicht vertrauenswürdigen Umgebung ausgeführt wird. Indem das Gerät in der Betriebsphase Sicherheitsmechanismen anwendet, die in einer vertrauenswürdigen Umgebung während der Konfigurationsphase etabliert wurden, kann es sicherstellen, dass nur autorisierte und unveränderte Software ausgeführt wird. Dies kann unabhängig von der Umgebung geschehen, in der sich das Gerät befindet, was die Einsatzmöglichkeiten des Geräts erweitert. Zum Beispiel kann ein loT-Gerät in einer rauen und unsicheren industriellen Umgebung betrieben werden, wobei es dennoch die Integrität seiner Software bewahrt. Die Ausführung der Betriebsphase in einer nicht vertrauenswürdigen Umgebung kann auch die Notwendigkeit einer ständigen Überwachung und Verwaltung durch den Benutzer verringern. Das Gerät kann autonom seine Integritätsprüfungen durchführen und sicherstellen, dass es sicher bleibt, auch wenn es physischen oder netzwerkbezogenen Bedrohungen ausgesetzt ist. Dies kann insbesondere in abgelegenen oder schwer zugänglichen Bereichen von Vorteil sein, wie beispielsweise in Sensoren oder Überwachungsgeräten. Durch den Einsatz von robusten Sicherheitsmechanismen, wie der Verwendung von symmetrischen Berechtigungsnachweisen zur Prüfung der Integrität von Boot-Schichten und der Verknüpfung dieser Schichten mit Integritätsreferenzwerten, kann das Gerät selbst in nicht vertrauenswürdigen Umgebungen sicher arbeiten. Dies kann dazu beitragen, Manipulationen oder unautorisierten Zugriff zu verhindern und die Zuverlässigkeit und Sicherheit des Geräts zu gewährleisten.

Es kann vorgesehen sein, dass die OWF-Rechenfunktion die zwei Ergebniswerte durch einen Identifikator unterscheidet. Indem die OWF-Rechenfunktion (One-Way Function) die zwei Ergebniswerte durch einen Identifikator unterscheidet, kann eine klare und eindeutige Trennung zwischen verschiedenen Sicherheitsfunktionen gewährleistet werden. Es kann die Integrität und Sicherheit der erzeugten Schlüssel und Berechtigungsnachweise erhöht werden. Durch die Verwendung eines Identifikators kann sichergestellt werden, dass der erste Ergebniswert (CDI0) für die Schlüsselkette und der zweite Ergebniswert (CDI_sec0) für die sichere Boot-Verifizierungskette eindeutig identifizierbar und nicht miteinander austauschbar sind. Dies kann verhindern, dass Fehler oder Manipulationen entstehen, indem falsche Schlüssel oder Werte verwendet werden. Ferner kann die Verwendung eines Identifikators die Flexibilität und Skalierbarkeit des Gerätes verbessern. Verschiedene Boot-Schichten und Sicherheitsmechanismen können spezifische Identifikatoren erhalten, wodurch die OWF-Rechenfunktion in verschiedenen Kontexten und für unterschiedliche Zwecke wiederverwendbar wird. Dies kann die Implementierung und Wartung von Sicherheitsprotokollen vereinfachen und konsistenter gestalten. Zudem kann die Sicherheit des Gerätes insgesamt erhöht werden. Durch die klare Unterscheidung der Ergebniswerte kann das Gerät robust gegen Angriffe sein, bei denen versucht wird, die Sicherheitsfunktionen zu umgehen oder zu manipulieren. Der Identifikator stellt sicher, dass die jeweiligen Schlüssel und Berechtigungsnachweise nur in ihrem vorgesehenen Kontext verwendet werden, wodurch die Angriffsmöglichkeiten reduziert werden. In sicherheitskritischen Anwendungen, wie beispielsweise in industriellen Steuerungen, Medizingeräten oder loT-Systemen, kann dieser Ansatz dazu beitragen, die Integrität und Verlässlichkeit der Software und der gesamten Systemoperation zu gewährleisten. Die eindeutige Unterscheidung der Ergebniswerte kann somit die Basis für einen sicheren und manipulationsresistenten Boot-Prozess bilden.

Es kann vorgesehen sein, dass die Verwaltung der Ergebniswerte von einer geräteinternen Verwaltungseinheit ausgeführt wird, beispielsweise für FW/SW Updates. Es kann die Sicherheit und Effizienz der Schlüssel- und Berechtigungsnachweisverwaltung verbessert werden. Durch die Integration einer geräteinternen Verwaltungseinheit kann sichergestellt werden, dass die sensiblen kryptografischen Schlüssel und Berechtigungsnachweise innerhalb des Geräts verbleiben und nicht externen Bedrohungen ausgesetzt sind.

Es kann das Risiko von unautorisierten Zugriffen und Manipulationen minimiert werden. Da die Verwaltungseinheit direkt im Gerät integriert ist, können die Ergebniswerte, wie CDI0 und CDI_sec0, sicher und effizient verwaltet werden. Dies kann insbesondere in sicherheitskritischen Anwendungen von Bedeutung sein, wo der Schutz der kryptografischen Schlüssel und Berechtigungsnachweise entscheidend ist. Weiterhin kann die geräteinterne Verwaltungseinheit die Effizienz der Schlüsselverwaltung erhöhen. Es kann sichergestellt werden, dass die Schlüssel schnell und zuverlässig verfügbar sind, wenn sie benötigt werden, ohne dass zusätzliche Verzögerungen durch externe Verwaltungssysteme entstehen. Dies kann die Gesamtleistung des Geräts verbessern, insbesondere während des Boot-Prozesses und bei der Durchführung sicherheitsrelevanter Operationen. Zudem kann die Wartbarkeit und Flexibilität des Gerätes erhöht werden. Eine geräteinterne Verwaltungseinheit kann so konzipiert werden, dass sie leicht aktualisiert und an neue Sicherheitsanforderungen angepasst werden kann, ohne dass umfangreiche Änderungen an der gesamten Gerätestruktur erforderlich sind. Dies kann die Anpassungsfähigkeit des Geräts an neue Bedrohungen und Anforderungen erhöhen.

Die geräteinterne Verwaltungseinheit kann als Softwaremodul, Hardwaremodul oder eine Kombination aus beiden implementiert werden, um den spezifischen Anforderungen und Gegebenheiten des Geräts gerecht zu werden. Die Verwaltungseinheit kann als spezielles Softwaremodul innerhalb des Betriebssystems oder der Firmware des Geräts implementiert sein. Hierdurch kann eine hohe Flexibilität und einfache Aktualisierung erzielt werden. Softwaremodule können leicht angepasst und erweitert werden, um neuen Sicherheitsanforderungen gerecht zu werden. Alternativ oder ergänzend kann die Verwaltungseinheit als dediziertes Hardwaremodul innerhalb des Geräts implementiert sein, wie ein Trusted Platform Module (TPM) oder ein Secure Element (SE). Es kann eine höhere Sicherheit durch physische Isolation der Schlüssel und Berechtigungsnachweise von der restlichen Systemsoftware erfolgen. Hardwaremodule sind weniger anfällig für Softwarebasierte Angriffe. Ferner kann eine Kombination aus einer softwarebasierten und hardwarebasierten Lösung vorgesehen sein.

In sicherheitskritischen Bereichen wie der industriellen Automatisierung, der Medizintechnik oder bei loT-Geräten kann die geräteinterne Verwaltungseinheit dazu beitragen, die Integrität und Vertraulichkeit der gespeicherten und verwalteten Daten zu gewährleisten. Die geräteinterne Verwaltungseinheit kann als zentraler Punkt für die Verwaltung aller sicherheitsrelevanten Informationen dienen, wodurch eine konsistente und robuste Sicherheitsarchitektur implementiert werden kann.

Es kann vorgesehen sein, dass der erste Ergebniswert der OWF-Rechenfunktion direkt an eine weitere Schicht übertragen wird und der zweite Ergebniswert innerhalb der ersten Boot-Schicht verbleibt. Indem der erste Ergebniswert (CDI0) direkt an eine weitere Schicht übertragen wird, kann eine nahtlose und effiziente Übergabe der notwendigen kryptografischen Schlüssel und Berechtigungsnachweise zwischen den Boot-Schichten gewährleistet werden. Dies kann sicherstellen, dass jede Schicht die erforderlichen Informationen erhält, um ihre eigenen Integritätsprüfungen durchzuführen und somit die Sicherheit des gesamten Boot-Prozesses zu erhöhen. Der zweite Ergebniswert (CDI_sec0) verbleibt innerhalb der ersten Boot-Schicht, was die Sicherheit verstärken kann. Durch das Verbleiben dieses kritischen Wertes innerhalb der aktuellen Schicht kann verhindert werden, dass sensible Informationen außerhalb der Schicht gelangen und potenziell von Angreifern ausgenutzt werden. Dies kann die Integrität der ersten Boot-Schicht und die Gesamtsicherheit des Geräts verbessern. Zudem kann das Risiko von Manipulationen und unautorisierten Zugriffen minimiert werden. Da der zweite Ergebniswert (CDI_sec0) nicht an die nächste Schicht weitergegeben wird, bleibt er vor Angriffen geschützt, die darauf abzielen, zwischen den Schichten zu kommunizieren und Sicherheitsmechanismen zu umgehen.

Es kann vorgesehen sein, dass der symmetrische Berechtigungsnachweis einen geheimen Schlüssel umfasst und zur Prüfung der Integrität der ersten Boot-Schicht der ausführbaren Funktion bereitgestellt wird. Es kann die Sicherheit und Zuverlässigkeit des Boot-Prozesses erhöht werden. Die Bereitstellung eines symmetrischen Berechtigungsnachweises, der einen geheimen Schlüssel umfasst, kann sicherstellen, dass die Integritätsprüfung der ersten Boot-Schicht auf einer soliden kryptografischen Grundlage basiert. Dies kann verhindern, dass manipulierte oder unautorisierte Software in der ersten Boot-Schicht ausgeführt wird, indem sie die Integrität der Software überprüft und nur bei erfolgreicher Verifizierung den Boot-Prozess fortsetzt. Die Verwendung eines symmetrischen Berechtigungsnachweises kann die Effizienz und Schnelligkeit der Integritätsprüfung verbessern. Symmetrische Kryptografie kann weniger Rechenressourcen und Zeit erfordern als asymmetrische Kryptografie, was insbesondere für ressourcenbeschränkte Geräte von Vorteil sein kann. Dadurch kann der Boot-Prozess beschleunigt werden, ohne die Sicherheit zu beeinträchtigen. Der geheime Schlüssel, der im symmetrischen Berechtigungsnachweis enthalten ist, kann die Vertraulichkeit und Integrität der Schlüsselverwaltung sicherstellen. Da der Schlüssel nur innerhalb des Geräts verwendet und gespeichert wird, kann das Risiko von unautorisierten Zugriffen und Datenleacks minimiert werden. Dies kann die Gesamtsicherheit des Gerätes erhöhen, da der Schlüssel nicht extern übertragen oder offengelegt wird. Durch die Prüfung der Integrität der ersten Boot-Schicht mittels des symmetrischen Berechtigungsnachweises kann eine solide Basis für die Sicherheit des gesamten Boot-Prozesses bereitgestellt werden. Wenn die Integrität der ersten Schicht gewährleistet ist, kann auch die Integrität der nachfolgenden Schichten besser geschützt werden, da jede Schicht auf der vorherigen aufbaut.

Es kann vorgesehen sein, dass die Messung der ersten Boot-Schicht und des ersten symmetrischen Berechtigungsnachweises als Eingabe für eine Berechnungsfunktion verwendet werden, um den Integritätsprüfwert zu berechnen, und wobei die Berechnungsfunktion wenigstens umfasst: eine HMAC-Funktion, eine MAC-Funktion, eine CMAC-Funktion und/oder eine AEAD-Funktion. Diese Vorgehensweise kann die Sicherheit und Effizienz der Integritätsprüfung erheblich verbessern.

Durch die Nutzung der Messung der ersten Boot-Schicht und des symmetrischen Berechtigungsnachweises als Eingabe für eine Berechnungsfunktion kann die Integrität der ersten Boot-Schicht zuverlässig verifiziert werden. Dies kann sicherstellen, dass nur autorisierte und unveränderte Software in dieser Schicht ausgeführt wird, was die Gesamtintegrität des Boot-Prozesses erhöht.

Die Verwendung spezifischer kryptografischer Funktionen wie HMAC, MAC, CMAC und AEAD kann die Flexibilität und Anpassungsfähigkeit des Systems verbessern. Die zuvor genannten Funktionen bieten unterschiedliche Sicherheitsmerkmale und können je nach spezifischen Anforderungen und Ressourcenverfügbarkeiten des Geräts eingesetzt werden. HMAC (Hash-based Message Authentication Code) kann eine starke Integritätsprüfung bieten, während AEAD (Authenticated Encryption with Associated Data) sowohl Integrität als auch Vertraulichkeit gewährleisten kann. Symmetrische kryptografische Funktionen wie HMAC und CMAC können weniger Rechenressourcen erfordern und schneller ausgeführt werden als asymmetrische Verfahren, was insbesondere für ressourcenbeschränkte Geräte vorteilhaft sein kann. Dies kann dazu beitragen, den Boot-Prozess zu beschleunigen, ohne die Sicherheitsanforderungen zu beeinträchtigen. Zudem kann die Robustheit gegen Manipulationsversuche erhöht werden. Durch die Kombination von Messdaten der Boot-Schicht und dem symmetrischen Berechtigungsnachweis kann sichergestellt werden, dass jede Änderung in der Software sofort erkannt wird, da der resultierende Integritätsprüfwert nicht mit dem erwarteten Referenzwert übereinstimmt.

Es kann vorgesehen sein, dass für jede weitere Boot-Schicht die Durchführung der Schlüsselableitungsfunktion und die Verifizierung der Integrität der ausführbaren Funktion erfolgt, indem als Eingabe für die Schlüsselableitungsfunktion der vorhergehende erste Ergebniswert, CDI-x, der vorhergehenden Boot-Schicht durch die OWF-Rechenfunktion verwendet wird, um einen symmetrischen Berechtigungsnachweis für die weitere Boot-Schicht zu berechnen und deren Integritätsprüfwert mit dem gespeicherten Referenz-Integritätsprüfwert, ICV_ref-x zu vergleichen. Durch kontinuierliche Nutzung der Ergebniswerte aus vorhergehenden Boot-Schichten für die Berechnung der Schlüssel für nachfolgende Schichten kann eine robuste Kette der Vertrauenswürdigkeit etabliert werden. Jede Boot-Schicht wird somit abhängig von der Integrität der vorherigen Schicht geprüft, was eine kumulative Sicherheitsschicht erzeugt. Dies kann sicherstellen, dass Manipulationen oder unautorisierte Änderungen in einer Schicht sofort erkannt und der Boot-Prozess gestoppt werden, bevor das Gerät in einen unsicheren Zustand übergeht. Die Anwendung der OWF-Rechenfunktion (One-Way Function) in diesem Prozess kann die kryptografische Sicherheit erhöhen, da die Berechnungen auf Einwegfunktionen basieren, die schwer umkehrbar sind. Dies kann verhindern, dass Angreifer die ursprünglichen Schlüssel aus den Ergebniswerten rekonstruieren und somit das System kompromittieren.

Zudem kann die Verwendung symmetrischer Berechtigungsnachweise die Effizienz des Gerätes steigern. Symmetrische Kryptografie kann weniger Rechenleistung und ggfs. auch weniger Speicherressourcen erfordern als asymmetrische Verfahren, was besonders für ressourcenbeschränkte Geräte vorteilhaft sein kann. Dies kann zu einer schnelleren und effizienteren Durchführung der Integritätsprüfungen führen, ohne die Sicherheit zu beeinträchtigen. Durch den Vergleich der berechneten Integritätsprüfwerte mit den gespeicherten Referenz-Integritätsprüfwerten (ICV_ref-x) kann das Gerät eine zuverlässige Überprüfung der Softwareintegrität in jeder Boot-Schicht sicherstellen. Dieser Ansatz kann auch dazu beitragen, die Konsistenz und Zuverlässigkeit des Boot-Prozesses zu gewährleisten, indem jede Schicht nur dann geladen wird, wenn die Integrität der vorherigen Schicht bestätigt wurde.

Es kann vorgesehen sein, dass der zweite Ergebniswert und das aus der Schlüsselableitungsfunktion resultierende Ergebnis nach der Berechnung des Integritätsprüfwertes aus der Speichervorrichtung gelöscht werden. Durch die Löschung des zweiten Ergebniswerts (CDI_sec0) und des resultierenden Schlüssels aus der Speichervorrichtung nach der Berechnung des Integritätsprüfwertes kann das Risiko von unautorisierten Zugriffen und Manipulationen minimiert werden. Sobald die Integritätsprüfung abgeschlossen ist, kann die Löschung dieser sensiblen Daten sicherstellen, dass keine temporären kryptografischen Schlüssel oder Berechtigungsnachweise in der Speichervorrichtung verbleiben, die von Angreifern ausgenutzt werden könnten. Da die temporären Werte nicht in der Speichervorrichtung vorgehalten werden, können potenzielle Angreifer diese Informationen nicht mehr verwenden, um Rückschlüsse auf die Schlüsselableitungsfunktion oder den Integritätsprüfwert zu ziehen. Dies kann die Sicherheit des gesamten Systems erhöhen und die Vertraulichkeit der kryptografischen Prozesse gewährleisten. Durch die regelmäßige Löschung sensibler Daten kann das Gerät auch effizienter arbeiten, da der verfügbare Speicherplatz nicht durch überflüssige Daten belegt wird. Dies kann insbesondere bei ressourcenbeschränkten Geräten vorteilhaft sein, bei denen der Speicherplatz begrenzt ist. Eine effiziente Speichernutzung kann die Gesamtleistung des Geräts verbessern und sicherstellen, dass immer ausreichend Speicherressourcen für laufende Prozesse verfügbar sind. Indem sensible Daten nach ihrer Verwendung gelöscht werden, kann das Gerät sicherstellen, dass jede neue Berechnung und jeder neue Schlüssel auf einer sauberen und sicheren Grundlage basiert. Dies kann helfen, die Integrität und Konsistenz der Sicherheitsprozesse über den gesamten Lebenszyklus des Geräts hinweg zu gewährleisten.

Es kann vorgesehen sein, dass der zweite Ergebniswert entfernt wird und die Schlüsselableitungsfunktion auf der Grundlage des ersten Ergebniswertes ausgeführt wird. Durch die Entfernung des zweiten Ergebniswerts (CDI_sec0) kann das Gerät vereinfacht werden, indem es nur einen einzigen Ergebniswert (CDI0) verwendet, um die Schlüsselableitungsfunktion auszuführen. Dies kann die Komplexität des Gerätes reduzieren und die Verwaltung der kryptografischen Schlüssel vereinfachen. Eine reduzierte Komplexität kann die Fehleranfälligkeit des Gerätes verringern und die Implementierung und Wartung der Sicherheitsprotokolle erleichtern. Zudem kann dadurch ggfs. auch die Sicherheit des Gerätes erhöht werden. Indem nur der erste Ergebniswert (CDI0) zur Schlüsselableitung verwendet wird, kann sichergestellt werden, dass keine zusätzlichen sensiblen Daten im Speicher verbleiben, die potenziell kompromittiert werden könnten. Dies kann das Risiko von Angriffen reduzieren, bei denen Angreifer versuchen, sensible Informationen aus dem Speicher zu extrahieren. Die Verwendung des ersten Ergebniswerts für die Schlüsselableitungsfunktion kann auch die Effizienz des Gerätes verbessern. Da nur ein einziger Wert verarbeitet werden muss, kann der Rechenaufwand reduziert werden, was insbesondere bei ressourcenbeschränkten Geräten von Vorteil sein kann. Dies kann zu einer schnelleren und effizienteren Durchführung der Integritätsprüfungen führen, ohne die Sicherheit zu beeinträchtigen.

Es kann vorgesehen sein, dass die OWF-Rechenfunktion durch eine weitere Schlüsselableitungsfunktion ersetzt wird, und das Ergebnis der weiteren Schlüsselableitungsfunktion direkt zur Berechnung von Integritätsprüfwertes für die weitere Boot-Schicht verwendet wird. Hierdurch kann die Anzahl der in jeder Schicht ausgeführten Operationen zu verringern und den für jede Boot-Schicht erforderlichen Rechenaufwand zu reduzieren. Durch die Ersetzung der OWF-Rechenfunktion (One-Way Function) durch eine Schlüsselableitungsfunktion (KDF) kann die Anzahl der in jeder Schicht ausgeführten Operationen verringert werden. Eine Schlüsselableitungsfunktion kann effizienter sein, da sie speziell für die sichere Ableitung von Schlüsseln aus einem vorgegebenen Eingabewert entwickelt wurde. Dies kann dazu führen, dass der gesamte Boot-Prozess beschleunigt wird, da weniger Rechenoperationen erforderlich sind. Es kann der für jede Boot-Schicht erforderliche Rechenaufwand reduziert werden. Da die Schlüsselableitungsfunktion direkt zur Berechnung des Integritätsprüfwertes verwendet wird, kann der Prozess optimiert und die Anzahl der notwendigen Berechnungsschritte minimiert werden. Dies kann insbesondere für ressourcenbeschränkte Geräte von Vorteil sein, die nur begrenzte Rechenkapazitäten und Speicherressourcen haben. Darüber hinaus kann die Verwendung einer Schlüsselableitungsfunktion anstelle einer OWF-Rechenfunktion die Sicherheit des Systems aufrechterhalten oder sogar verbessern. Schlüsselableitungsfunktionen sind darauf ausgelegt, sichere und kryptografisch starke Schlüssel zu erzeugen, was die Integrität der Sicherheitsprotokolle gewährleisten kann. Durch die direkte Verwendung des Ergebnisses der Schlüsselableitungsfunktion zur Berechnung des Integritätsprüfwertes kann die Komplexität des Gerätes und des Verfahrens reduziert werden. Eine vereinfachte Architektur kann die Implementierung und Wartung des Systems erleichtern und die Wahrscheinlichkeit von Fehlern und Sicherheitslücken verringern.

Es kann vorgesehen sein, dass der Integritätsreferenzwert durch eine HMAC-Operation ermittelt wird. Durch die Verwendung einer HMAC-Operation (Hash-based Message Authentication Code) zur Ermittlung des Integritätsreferenzwertes kann sichergestellt werden, dass der Referenzwert kryptografisch stark und manipulationssicher ist. Eine HMAC-Operation kombiniert eine kryptografische Hash-Funktion mit einem geheimen Schlüssel, wodurch ein eindeutiger und sicherer Authentifizierungscode erzeugt wird. Dies kann verhindern, dass unautorisierte Änderungen am Referenzwert vorgenommen werden, da jede Veränderung in der Eingabe zu einem völlig anderen HMAC-Wert führt. Die HMAC-Operation kann die Integrität und Authentizität der Daten gewährleisten. Durch die Verwendung eines geheimen Schlüssels kann sichergestellt werden, dass nur autorisierte Entitäten in der Lage sind, den korrekten HMAC-Wert zu berechnen und zu überprüfen. Dies kann das Gerät gegen verschiedene Arten von Angriffen schützen, wie beispielsweise Replay-Attacken oder Datenmanipulationen. Ferner sind kryptografische Hash-Funktionen, die in HMAC verwendet werden, effizient und können schnell berechnet werden. Dies kann die Berechnungszeit für die Ermittlung des Integritätsreferenzwertes minimieren und somit den gesamten Verifizierungsprozess beschleunigen. Besonders in ressourcenbeschränkten Geräten kann dies die Leistung und Reaktionsfähigkeit des Systems verbessern. Zudem kann die HMAC-Operation eine einheitliche und standardisierte Methode zur Ermittlung des Integritätsreferenzwertes bereitstellen.

Es kann vorgesehen sein, dass der Integritätsreferenzwert durch eine AEAD-Operation ermittelt wird. Durch die Verwendung einer AEAD-Operation (Authenticated Encryption with Associated Data) zur Ermittlung des Integritätsreferenzwertes kann eine kombinierte Sicherstellung von Vertraulichkeit, Integrität und Authentizität der Daten erreicht werden. AEAD-Operationen bieten sowohl Verschlüsselung als auch Authentifizierung in einem einzigen Schritt, wodurch der Integritätsreferenzwert kryptografisch stark und gegen Manipulationen geschützt wird. Dies kann verhindern, dass unautorisierte Änderungen an den Daten vorgenommen werden, da jede Veränderung sofort erkannt wird. Da AEAD sowohl Verschlüsselung als auch Authentifizierung gleichzeitig durchführt, kann der Gesamtaufwand für die Sicherstellung der Datenintegrität reduziert werden. Dies kann die Verarbeitungszeit minimieren und die Gesamtleistung des Systems verbessern, insbesondere in ressourcenbeschränkten Geräten, die auf effiziente Verarbeitung angewiesen sind. Durch die gleichzeitige Anwendung von Verschlüsselung und Authentifizierung wird sichergestellt, dass die Daten nicht nur vor unautorisiertem Zugriff geschützt sind, sondern auch ihre Integrität und Authentizität gewährleistet bleibt. Dies kann die Widerstandsfähigkeit des Gerätes gegen verschiedene Angriffsvektoren, wie beispielsweise Man-in-the-Middle-Angriffe oder Datenmanipulationen, erhöhen.

Es kann vorgesehen sein, dass der Integritätsreferenzwert durch CMAC-Operationen ermittelt wird. Durch die Verwendung von CMAC-Operationen (Cipher-based Message Authentication Code) zur Ermittlung des Integritätsreferenzwertes kann sichergestellt werden, dass der Referenzwert kryptografisch stark und manipulationssicher ist. CMAC basiert auf symmetrischen Verschlüsselungsalgorithmen, wie dem Advanced Encryption Standard (AES), und bietet eine starke Authentifizierung durch die Kombination eines geheimen Schlüssels mit den verschlüsselten Daten. Dies kann verhindern, dass unautorisierte Änderungen an den Daten vorgenommen werden, da jede Veränderung sofort erkannt wird. CMAC-Operationen können eine effiziente und schnelle Berechnung des Integritätsreferenzwertes ermöglichen. CMAC ist für seine Effizienz bekannt und kann mit relativ geringem Rechenaufwand implementiert werden. Dies kann besonders vorteilhaft für ressourcenbeschränkte Geräte sein, die nur begrenzte Rechenkapazitäten und Speicherressourcen haben. Eine schnelle Berechnung des Integritätsreferenzwertes kann den gesamten Verifizierungsprozess beschleunigen und die Leistung des Systems verbessern. Da CMAC auf einem gut etablierten und weit verbreiteten Verschlüsselungsstandard wie AES basiert, kann es eine hohe Sicherheit bieten und gleichzeitig auf bewährten kryptografischen Prinzipien aufbauen. Dies kann die Widerstandsfähigkeit des Systems gegen verschiedene Angriffsvektoren, wie beispielsweise Replay-Attacken oder Datenmanipulationen, erhöhen. Zudem kann die Implementierung von CMAC-Operationen die Konsistenz und Zuverlässigkeit der Sicherheitsprotokolle verbessern.

Es kann vorgesehen sein, dass der ermittelte Integritätsreferenzwertes zusammen mit der ausführbaren Funktion gespeichert wird. Durch die Speicherung des Integritätsreferenzwertes zusammen mit der ausführbaren Funktion kann eine enge Kopplung zwischen der Software und ihrem Integritätsstatus sichergestellt werden. Dies kann ermöglichen, dass die Integritätsprüfung jederzeit schnell und effizient durchgeführt werden kann, da der Referenzwert direkt verfügbar ist. Dies kann die Zeit minimieren, die für die Verifizierung der Softwareintegrität erforderlich ist, und den Boot- oder Update-Prozess beschleunigen. Da der Integritätsreferenzwert zusammen mit der ausführbaren Funktion gespeichert wird, kann sichergestellt werden, dass immer der korrekte Referenzwert zur Verifizierung herangezogen wird. Dies kann das Risiko von Fehlprüfungen oder Manipulationen reduzieren, die auftreten könnten, wenn die Referenzwerte separat oder an einem unsicheren Ort gespeichert werden. Durch die enge Kopplung und die gemeinsame Speicherung können zusätzliche Schutzmaßnahmen implementiert werden, die sicherstellen, dass beide Elemente gleichzeitig geschützt und verwaltet werden. Dies kann die Angriffsfläche reduzieren und es Angreifern erschweren, entweder die Software oder den Referenzwert zu manipulieren.

Es kann vorgesehen sein, dass das Gerät ein Gerät ist, welches über einen festen Zeitabschnitt in Betrieb ist, indem keine Aktualisierung der ausgeführten Funktionen erfolgt. Das Gerät kann als ein Feuermelder ausgebildet sein. Alternativ kann das Gerät als Sensor vorgesehen und/oder in ein Gerät beinhalten, welches in abgelegenen und/oder schwerzugänglichen Bereichen installiert ist.

Es kann vorgesehen sein, dass das Verfahren ein Bereitstellen einer Meldung umfasst, wenn die Integritätsprüfung ein fehlerbehaftetes Ergebnis beinhaltet. Die Meldung kann als visuelle Meldung, Audiomeldung oder Audio-/visuelle-Meldung ausgegeben werden. Hierfür kann die Vorrichtung entsprechende Mittel zur Ausgabe bereitstellen.

Es kann vorgesehen sein, dass das Verfahren ein Bereitstellen von Steuersignalen umfasst, die ein Ausführen von Funktionen des Gerätes oder das Ausführen/Starten des Gerätes beendet, wenn die Integritätsprüfung ein fehlerbehaftetes Ergebnis beinhaltet. Wenn die Integritätsprüfung ein fehlerbehaftetes Ergebnis liefert, können die bereitgestellten Steuersignale das Ausführen der Funktionen des Geräts oder das Starten des Geräts unverzüglich beenden. Dies kann verhindern, dass unsichere oder manipulierte Software ausgeführt wird, und somit die Integrität und Sicherheit des Systems gewährleisten.

Durch die Fähigkeit, den Betrieb des Geräts bei einer fehlerhaften Integritätsprüfung zu stoppen, kann das Gerät vor potenziellen Schäden oder Missbrauch geschützt werden. Dies kann besonders wichtig in sicherheitskritischen Anwendungen sein, wo der Einsatz manipulierter Software schwerwiegende Folgen haben könnte, wie z.B. in der industriellen Automatisierung, der Medizintechnik oder in sicherheitsrelevanten loT-Anwendungen.

Die sofortige Beendigung des Betriebs bei einer fehlerhaften Integritätsprüfung kann dazu beitragen, die Ausbreitung von Sicherheitsproblemen innerhalb eines Netzwerks zu verhindern. Indem das betroffene Gerät gestoppt wird, bevor es potenziell schädliche Aktionen ausführen kann, wird verhindert, dass Sicherheitslücken ausgenutzt werden und andere Geräte im Netzwerk gefährdet werden. Die Bereitstellung von Steuersignalen zur Beendigung des Betriebs kann auch die Diagnose und Behebung von Sicherheitsproblemen erleichtern. Wenn das Gerät bei einer fehlerhaften Integritätsprüfung gestoppt wird, kann dies als eindeutiges Signal dienen, dass eine Sicherheitsüberprüfung und Wartung erforderlich sind. Dies kann die Fehlersuche beschleunigen und sicherstellen, dass Sicherheitslücken schnell behoben werden.

Das oben Beschriebene lässt sich mit anderen Worten und auf eine mögliche konkretere Ausgestaltung der Offenbarung wie nachfolgend beschrieben zusammenfassen, wobei die nachfolgende Beschreibung als für die Offenbarung nicht einschränkend auszulegen ist.

Es kann vorgesehen sein, die Integrität der gebooteten Software mit Hilfe von Berechtigungsnachweisen zu schützen und zu überprüfen, die von der DICE-Architektur intern erzeugt werden kann. Mit diesem Mechanismus kann das Gerät die von DICE bereitgestellten Software-Messfunktionen nutzen, um das Integritätskennzeichen der nächsten Softwarestufe zu überprüfen und Gegenmaßnahmen zu ergreifen (z.B. eine Warnung auszugeben oder den Bootvorgang zu stoppen), wenn die Integrität nicht überprüft werden kann. Es wird eine DICE-Implementierung berücksichtigt, die auf symmetrischer Kryptographie basiert. Bei den Zielgeräten für diese Lösung handelt es sich um Geräte, die über einen langen Zeitraum in Betrieb sind.

### Phase 1: Berechnung der Integritätswerte

Diese Phase wird einmal durchgeführt, wenn eine neue Software (ausführbare Funktion) auf dem Gerät installiert wird, bevor es in den regulären Betriebsmodus übergeht. Diese Phase sollte in einer vertrauenswürdigen Umgebung durchgeführt werden, um eine Referenz für den Software-Integritätsstatus zu erhalten. Diese Lösung setzt voraus, dass jede Boot-Schicht mit einem symmetrischen Schlüssel geschützt ist, der von der DICE-Architektur stammt. Die erste Konfigurationsphase erfolgt von einem Hersteller in einer sicheren Umgebung. In dieser Anfangsphase wird das Gerät zum ersten Mal gebootet und die DICE-Zugangsdaten werden während des Bootens anhand der Messungen der vorgesehenen Software generiert. Die Berechtigungsnachweise werden verwendet, um einen Referenz-Integritätsprüfwert (ICV), genannt ICV_ref, für die vorgesehene Software zu erzeugen, z.B. mit einer HMAC-Operation:
ICV_ref = HMAC (DICE_Key, Softwaremessung).

Die ICV_ref kann als ein Tag betrachtet werden, das an die entsprechende Software angehängt wird, um ihren Integritätsstatus zu definieren. Es ist vorgesehen, dass die ICV_ref dann mit der entsprechenden gemessenen Software gespeichert wird. Für die Berechnung der ICV_ref können verschiedene Operationen verwendet werden. Eine MAC-Operation gilt im Allgemeinen als weniger sicher, würde aber weniger Rechenressourcen erfordern. Auch AEAD-Algorithmen (Authenticated Encryption with Associated Data) wie AES-GCM oder die ASCON-Algorithmenfamilie können verwendet werden, um die Integrität bei geringen Rechenkosten zu schützen. Ein weiterer Kandidat ist der CMAC. Unabhängig vom verwendeten Algorithmus kann die ICV_ref auf der Grundlage eines symmetrischen Schlüssels auf vertrauenswürdige Weise berechnet (und später in Phase 2 verifiziert) werden, um den Integritätsschutz der Softwaremessung zu gewährleisten. Die Forderung nach einem auf einem symmetrischen Schlüssel basierenden Algorithmus stellt sicher, dass die korrekte ICV_ref nur vom Inhaber dieses Schlüssels berechnet werden kann, und ermöglicht die Speicherung der ICV in einem ungeschützten Speicher (Reduzierung des Speicherbedarfs). Die verwendete Darstellung der Boot-Schicht, d h. die Software-Messung, kann je nach Anwendungsfall und Rechenkapazität des Geräts (z.B. Hash-Wert mit verschiedenen Algorithmen) und dem gewählten kryptografischen Algorithmus zur Berechnung der Integritätskennzeichnung variieren. Sobald die ICV generiert wurde, wird die integritätsgeschützte Software auf dem Gerät installiert und das Gerät kann in einer nicht vertrauenswürdigen Umgebung in den Betriebsmodus übergehen.

### Phase 2: Überprüfung der Integrität der Software

Nach der Erstkonfiguration kann das Gerät beim Booten die DICE-Schlüsselableitung durchführen. Die gebootete Software kann in mehrere verschiedene Boot-Schichten unterteilt werden. Die erste Schicht ist die Hardwareschicht. In dieser Phase der Boot-Kette kann ein Unique Device Secret (UDS) aus einem Speichergerät gelesen werden und als Eingabe für eine One-Way Function (OWF) bereitgestellt werden. Die OWF erzeugt zwei Werte (Ergebniswerte), einen für die Standard-DICE-Schlüsselkette (CDI0) und einen zweiten Wert für die sichere Boot-Verifizierungskette (CDI_sec0). Die OWF kann diese beiden Werte durch einen Identifikator unterscheiden. Die DICE-Schlüsselverwaltung kann von einer geräteinternen Schlüsselverwaltungseinheit durchgeführt werden. Schicht 0 kann eine Key Derivation Function (KDF) auf der Grundlage von CDI_sec0 ausführen, um einen symmetrischen Berechtigungsnachweis CDI_K0 zu erhalten. CDI0 kann direkt an die nächste Schicht weitergegeben werden. Stattdessen muss CDI_sec0 innerhalb der Boot-Schicht verbleiben, da es zur Ableitung eines geheimen Schlüssels CDI_K0 verwendet wird, um die Integrität der Stufe 1 zu verifizieren. Würden diese Werte (CDI_sec0 oder CDI_K0) an die nächste Schicht weitergegeben, könnte ein Angreifer die gebootete Software verändern und ein gültiges ICV_ref-Tag für die manipulierte Software berechnen. Die Messung von Schicht 1 und CDI_K0 kann als Eingabe für eine HMAC-Funktion (oder MAC-, CMAC-, AEAD-Funktion usw.) bereitgestellt werden, um einen ICV, genannt ICV_check, zu erzeugen.
ICV1_check = HMAC (CDI_K0, Messung der Schicht 1)

Das Ergebnis dieser Operation wäre eine ICV für die Software, die als Schicht 1 gebootet wird, genannt ICV1_check. Nach der vorgeschlagenen Idee wurde Schicht 1, d.h. der erste veränderbare Code, mit der für diese Schicht beim ersten Booten berechneten ICV, d.h. ICV1_ref, auf das Gerät geladen. Wenn ICV1_check mit der gespeicherten ICV1_ref übereinstimmt, dann ist die Software der Schicht 1 integer und es kann sicher gebootet werden. Andernfalls würde der Bootvorgang unterbrochen oder eine Warnung für den Benutzer ausgegeben, so dass keine manipulierte Software ausgeführt werden kann.

In ähnlicher Weise kann Schicht 1 eine Messung für Schicht 2 berechnen und CDI1 und CDI_sec1 mit dem OWF erhalten. CDI1 kann von Schicht 1 weiter zur Erzeugung eines DICE-Schlüssels verwendet werden. Stattdessen wird CDI_sec1 von Schicht 1 zur Berechnung von ICV2_check verwendet, um es mit ICV2_ref zu vergleichen.

Alternativ können CDI_sec0, CDI_sec1 und das aus der KDF resultierende Schlüsselmaterial nach der Berechnung der ICV_check aus dem flüchtigen Speicher gelöscht werden. Dieser Mechanismus kann die Sicherheit des offenbarungsgemäßen Verfahrens erhöhen.

Alternativ können CDI_sec0 und CDI_sec1 aus der Schlüsselkette entfernt und CDI0 und CDI1 als Eingabe für die KDF verwendet werden. Bei dieser Alternative kann davon ausgegangen werden, dass CDI0 und CDI1 für einen Angreifer nicht lesbar sind.

Alternativ kann die zur Ermittlung von CDIn und CDI_secn verwendete OWF durch eine Schlüsselableitungsfunktion ersetzt werden. Der Vorteil dieser Alternative ist, dass die Ausgabe der KDF direkt zur Berechnung von ICVn+1_check für die nächste Schicht verwendet werden kann. Dies würde die Anzahl der in jeder Schicht ausgeführten Operationen verringern und den für jede Schicht erforderlichen Rechenaufwand reduzieren.

Firmware-Updates, die die Firmware der Schicht 2 und/oder die Firmware der Schicht 1 verändern, können zum Beispiel um verschiedene Möglichkeiten erweitert werden:
1. Ein Firmware-Aktualisierungsdienst empfängt die neue Firmware und prüft ihre Authentizität, indem er entweder das Firmware-Objekt schützt oder die Firmware über einen sicheren Kanal überträgt, der jeweils mit symmetrischen Schlüsseln aus der DICE-Schlüsselkette geschützt ist. Das Firmware-Update kann auch durch die Verwendung von Hash-basierten Signaturen geschützt werden. Der Firmware-Update-Dienst kann ein Firmware-Update-Flag für Schicht 0 setzen und löst den Neustart des Geräts aus. Während des Bootens wertet Schicht 0 das Firmware-Update-Flag aus, und wenn es gesetzt ist, führt das Gerät einmal die erste Phase (Phase 1: Berechnung der Integritätswerte) durch, um die ICV-Werte zu aktualisieren. Die früheren ICV-Werte der Schichten können beibehalten und in die Messung einbezogen werden, um die Historie der FW-Aktualisierungen widerzuspiegeln.
2. Ein Firmware-Update-Dienst erhält die neue Firmware und ein Firmware-Update-Token vom Hersteller, das die Schicht 0 zur Durchführung der ersten Phase berechtigt. Das Firmware-Update-Token ist durch symmetrische Kryptografie und einen symmetrischen Schlüssel geschützt, entweder einen geräteindividuellen Schlüssel, der aus der DICE-Architektur generiert wird, oder einen globalen Schlüssel für Gerätetyp und Hersteller, der sicher auf dem Gerät gespeichert und durch einen in Schicht 0 generierten DICE-Schlüssel verschlüsselt ist. Das Firmware-Update-Token kann an das Firmware-Update-Objekt gebunden sein, indem es z.B. einen Integritätswert der Firmware enthält. Das Firmware-Update-Token kann weitere Metainformationen der Firmware (z.B. Firmware-Version), Aktualitätsinformationen wie eine Gültigkeitsdauer enthalten. Das Firmware-Update-Token kann weitere Voraussetzungen für die Auslösung von Phase 1 enthalten, z.B. dass ein Firmware-Update nur möglich ist, wenn die aktuelle Version einen bestimmten ICV-Wert hat. Die früheren ICV-Werte der Schichten können aufbewahrt und in die Messung einbezogen werden, um die Historie der Firmware-Aktualisierungen widerzuspiegeln. Dieser Ansatz ist sicherer als Ansatz 1.

Ferner ist eine Vorrichtung zur Integritätsprüfung einer ausführbaren Funktion eines Gerätes mit einer Schnittstelle zur Kommunikation mit dem Gerät und einer Prozessoreinheit vorgesehen. Die Vorrichtung ist ausgestaltet, um das offenbarungsgemäße Verfahren auszuführen.

Ferner wird ein Computerprogramm, umfassend Befehle, die bei der Ausführung des Programms durch einen Computer diesen veranlassen, dass oben beschriebene Verfahren zumindest teilweise aus- bzw. durchzuführen, bereitgestellt. Ein Programmcode des Computerprogramms kann in einem beliebigen Code vorliegen, insbesondere in einem Code, der für Steuerungen von Robotersystemen geeignet ist.

Ferner wird ein Verfahren zur Durchführung von Funktionen-Updates bei einem Gerät 10 mit einer ausführbaren Funktion umfassend mehrere Boot-Schichten bereitgestellt. Das Verfahren kann mehrere Verfahrensschritte umfassen. In einem ersten Verfahrensschritt erfolgt ein Empfangen einer neuen ausführbaren Funktion durch einen Aktualisierungsdienst und Prüfen ihrer Authentizität, indem entweder das Funktions-Objekt geschützt oder die ausführbare Funktion über einen sicheren Kanal übertragen wird, der jeweils mit symmetrischen Schlüsseln aus einer Schlüsselableitungsfunktion, insbesondere einer DICE-Schlüsselableitungsfunktion geschützt ist. In einem weiteren Schritt erfolgt ein Setzen eines Funktions-Update-Flags für eine erste Schicht durch den Aktualisierungsdienst und Auslösen eines Neustarts des Gerätes. In einem weiteren Schritt erfolgt ein Auswerten des Funktions-Update-Flags während des Bootvorgangs durch die erste Schicht, und falls das Flag gesetzt ist, einmaliges durchführen einer ersten Phase zur Berechnung der Integritätswerte (ICV) zur Aktualisierung der ICV-Werte, wobei die früheren ICV-Werte der Schichten beibehalten und in die Messung einbezogen werden, um die Historie der Funktions-Updates widerzuspiegeln.

Ein technischer Vorteil kann darin bestehen, dass das Gerät in der Lage ist, sicher und effizient Updates der ausführbaren Funktionen zu empfangen und zu verifizieren. Indem die neue ausführbare Funktion durch einen Aktualisierungsdienst empfangen und ihre Authentizität geprüft wird, kann sichergestellt werden, dass nur autorisierte und unveränderte Software-Updates installiert werden. Dies kann verhindern, dass manipulierte oder schädliche Software auf das Gerät gelangt und die Sicherheit des Systems gefährdet. Die Verwendung eines sicheren Kanals, der mit symmetrischen Schlüsseln aus einer Schlüsselableitungsfunktion, insbesondere einer DICE-Schlüsselableitungsfunktion, geschützt ist, kann die Vertraulichkeit und Integrität der übertragenen Daten gewährleisten. Dies kann dazu beitragen, das Risiko von Datenmanipulationen oder Abhörversuchen während der Übertragung zu minimieren. Durch das Setzen eines Funktions-Update-Flags für die erste Schicht und das Auslösen eines Neustarts des Gerätes kann sichergestellt werden, dass das Update-Prozess ordnungsgemäß initiiert und überwacht wird. Dies kann die Koordination und Konsistenz des Update-Prozesses verbessern, indem sichergestellt wird, dass alle relevanten Schichten des Gerätes auf das bevorstehende Update vorbereitet sind.

Das Verfahren zur Durchführung von Funktionen-Updates umfasst ferner, wobei der Aktualisierungsdienst ein Funktions-Update-Token vom Hersteller erhält, das die erste Schicht zur Durchführung der ersten Phase berechtigt, und das Funktions-Update-Token durch symmetrische Kryptografie und einen symmetrischen Schlüssel geschützt ist, entweder einen geräteindividuellen Schlüssel, der aus der DICE-Architektur generiert wird, oder einen globalen Schlüssel für Gerätetyp und Hersteller, der sicher auf dem Gerät gespeichert und durch einen in der ersten Schicht generierten DICE-Schlüssel verschlüsselt ist.

Das Verfahren zur Durchführung von Funktionen-Updates umfasst ferner, wobei das Funktionen-Update-Token an das Funktionen-Update-Objekt gebunden ist, indem es einen Integritätswert der Funktion enthält.

Das Verfahren zur Durchführung von Funktionen-Updates umfasst ferner, wobei das Funktionen-Update-Token weitere Metainformationen der Funktion wie die Version und Aktualitätsinformationen wie eine Gültigkeitsdauer enthält.

Das Verfahren zur Durchführung von Funktionen-Updates umfasst ferner, wobei das Funktionen-Update-Token weitere Voraussetzungen für die Auslösung der ersten Phase enthält, einschließlich der Bedingung, dass ein Funktionen-Update nur möglich ist, wenn die aktuelle Version einen bestimmten ICV-Wert aufweist.

Das Verfahren zur Durchführung von Funktionen-Updates umfasst ferner, wobei das Funktionen-Update auch durch die Verwendung von Hash-basierten Signaturen geschützt ist.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Offenbarung umfassen auch nicht explizit genannte Kombinationen von zuvor oder im Folgenden bezüglich der Ausführungsbeispiele beschriebenen Merkmale der Offenbarung. Insbesondere wird dabei der Fachmann auch Einzelaspekte als Verbesserungen oder Ergänzungen zu der jeweiligen Grundform der vorliegenden Offenbarung hinzufügen.

Die vorliegende Offenbarung wird nachfolgend anhand der in den schematischen Figuren der Zeichnungen angegebenen Ausführungsbeispiele näher erläutert. Es zeigen dabei:
- Fig. 1: schematisch eine Vorrichtung zur Integritätsprüfung in Kommunikation mit einem zu prüfenden Gerät;
- Fig. 2: schematisch ein Ablaufdiagramm einer Ausführungsform des offenbarungsgemäßen Verfahrens, und
- Fig. 3: schematisch ein Ablaufdiagramm einer weiteren Ausführungsform des offenbarungsgemäßen Verfahrens.

Die beiliegenden Zeichnungen sollen ein weiteres Verständnis der Ausführungsformen der Offenbarung vermitteln. Sie veranschaulichen Ausführungsformen und dienen im Zusammenhang mit der Beschreibung der Erklärung von Prinzipien und Konzepten der Offenbarung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausführt ist -jeweils mit denselben Bezugszeichen versehen.

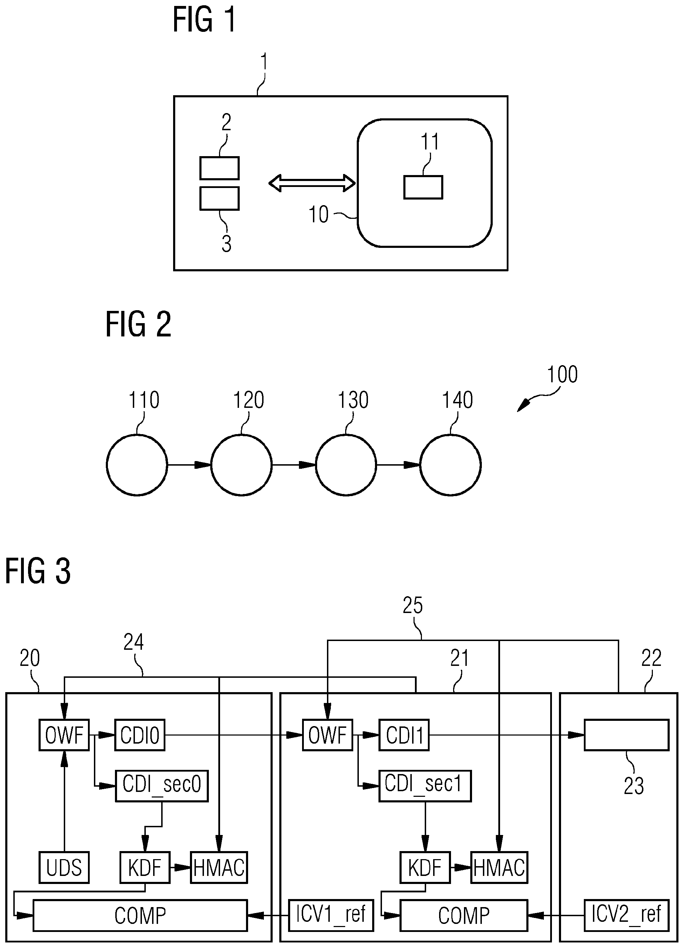

Die in Figur 1 lediglich schematisch dargestellte Vorrichtung 1 weist eine interne Schnittstelle 2 und eine Prozessoreinheit 3 auf.

Die Schnittstelle 2 ist dazu ausgebildet, eine interne Kommunikationsverbindung mit einer geräteinternen Geräteinheit 10 oder Gerätemodul 10 aufzubauen. Die Kommunikationsverbindung ist drahtgebunden, kann aber auch drahtlos unter Anwendung bekannter Kommunikationsstandards sein. Über die Kommunikationsverbindung kann lokal oder zentral eine Kommunikation zwischen Einheiten der der Vorrichtung 1, wie etwa der Prozessoreinheit 3, und der Geräteinheit 10 hergestellt werden. Ferner kann die Schnittstelle 2 ausgebildet sein, eine Kommunikationsverbindung zu einem Netzwerk und/oder weiteren Vorrichtungen, Computer und/oder Server aufzubauen und diese zu verbinden, um Daten, Funktionen, Programme, Software, Firmware zu laden und/oder bereitzustellen.

Die Vorrichtung 1 kann als ein Computer, Laptop oder Handheld ausgebildet sein. Die Geräteeinheit 10 kann verschiedene Gerätfunktionen beinhalten, wie etwa die Funktion eines Feuermelders, Umweltsensors, Industrie-Steuergeräts, Routers, elektronisches Steuergeräts, loT-Geräts, und dergleichen.

Die Prozessoreinheit 3 der Vorrichtung 1 ist ausgestaltet, um das nachfolgend auch mit Bezug zu der Figur 2 im Detail beschriebene Verfahren 100 zur Integritätsprüfung einer ausführbaren Funktion der Geräteinheit 10 auszuführen. Die Prozessoreinheit 3 der Vorrichtung 1 ist ausgestaltet, um in einem ersten Verfahrensschritt 110 eine OWF-Rechenfunktion, OWF_R, bei einem betriebsbedingten Starten der Geräteinheit 10, insbesondere in einer Betriebs-/Anwendungsphase, auszuführen. Die ausführbare Funktion wird in eine Vielzahl an Boot-Schichten unterteilt. Es wird ein einzigartiges Gerätegeheimnis, UDS, aus einer Speichervorrichtung 11 gelesen und als Eingabe für die OWF-Rechenfunktion verwendet, um zwei Ergebniswerte zu erzeugen: 1) einen ersten Ergebniswert für eine Schlüsselkette, CDI0, und 2) einen zweiten Ergebniswert für eine sichere Boot-Verifizierungskette, CDI_sec0. In einem weiteren Schritt 120 erfolgt ein Ermitteln eines symmetrischen Berechtigungsnachweises, CDI_K0, durch ein Ausführen einer Schlüsselableitungsfunktion, KDF, insbesondere einer DICE-Schlüsselableitungsfunktion, auf der Grundlage des zweiten Wertes. In einem weiteren Schritt 140 erfolgt das Verwenden des symmetrischen Berechtigungsnachweises zur Prüfung der Integrität einer ersten Boot-Schicht der ausführbaren Funktion durch Berechnung eines Integritätsprüfwertes, ICV_check, wobei der ICV_check mit einem Integritätsreferenzwertes, ICV_ref, verglichen wird und bei einer Übereinstimmung eine weitere Boot-Schicht zur Prüfung geladen wird, andernfalls ein fehlerbehaftetes Ergebnis für die Integrationsprüfung bereitgestellt wird.

Die Prozessoreinheit 3 der Vorrichtung 1 ist ferner ausgestaltet, ein Verfahren zur Durchführung von Funktionen-Updates bei der Geräteinheit 10 mit einer ausführbaren Funktion umfassend mehrere Boot-Schichten auszuführen. Das Verfahren kann mehrere Verfahrensschritte umfassen. In einem ersten Verfahrensschritt erfolgt ein Empfangen einer neuen ausführbaren Funktion durch einen Aktualisierungsdienst und Prüfen ihrer Authentizität, indem entweder das Funktions-Objekt geschützt oder die ausführbare Funktion über einen sicheren Kanal übertragen wird, der jeweils mit symmetrischen Schlüsseln aus einer Schlüsselableitungsfunktion, insbesondere einer DICE-Schlüsselableitungsfunktion geschützt ist. In einem weiteren Schritt erfolgt ein Setzen eines Funktions-Update-Flags für eine erste Schicht durch den Aktualisierungsdienst und Auslösen eines Neustarts der Geräteinheit 10. In einem weiteren Schritt erfolgt ein Auswerten des Funktions-Update-Flags während des Bootvorgangs durch die erste Schicht, und falls das Flag gesetzt ist, einmaliges durchführen einer ersten Phase zur Berechnung der Integritätswerte (ICV) zur Aktualisierung der ICV-Werte, wobei die früheren ICV-Werte der Schichten beibehalten und in die Messung einbezogen werden, um die Historie der Funktions-Updates widerzuspiegeln.

In Figur 3 ist das Verfahren 100 der Figur 2 in einer weiteren Ausgestaltung dargestellt. Es wird das Verfahren 100 zur Integritätsprüfung einer ausführbaren Funktion einer Geräteinheit 10, das aus einer Vielzahl von Verfahrensschritten besteht. Die Gerätheit 10 umfasst eine Speichervorrichtung 11 und die ausführbare Funktion, bspw. eine Firmware ist in mehrere Boot-Schichten unterteilt: erste Schicht 20, zweite Schicht 21 und dritte Schicht 22.

Für die erste Schicht 20 werden die folgenden Komponenten herangezogen: eine OWF-Rechenfunktion (OWF), ein einzigartiges Gerätegeheimnis (UDS), eine Schlüsselableitungsfunktion (KDF), eine HMAC-Funktion (HMAC) und eine Vergleichsfunktion (COMP). Die OWF-Rechenfunktion liest das UDS aus der Speichervorrichtung 11 der Geräteinheit 10 und verwendet es als Eingabe, um zwei Ergebniswerte zu erzeugen: einen ersten Ergebniswert für eine Schlüsselkette (CDI0) und einen zweiten Ergebniswert für eine sichere Boot-Verifizierungskette (CDI_sec0). Die Schlüsselableitungsfunktion (KDF) ermittelt aus dem zweiten Ergebniswert (CDI_sec0) einen symmetrischen Berechtigungsnachweis (CDI_K0). Die HMAC-Funktion berechnet einen Integritätsprüfwert (ICV_check), der durch die Vergleichsfunktion (COMP) mit einem Integritätsreferenzwert (ICV1_ref) verglichen wird. Wenn der Vergleich erfolgreich ist, wird die nächste Boot-Schicht zur weiteren Prüfung geladen, andernfalls wird ein fehlerhaftes Ergebnis für die Integritätsprüfung bereitgestellt.

Die erste Schicht 21 enthält ähnliche Komponenten: eine OWF-Rechenfunktion (OWF), eine Schlüsselableitungsfunktion (KDF), eine HMAC-Funktion (HMAC) und eine Vergleichsfunktion (COMP). Diese Schicht ist verantwortlich für die Messung der ersten Boot-Schicht 24 und verwendet CDI_sec1 für die Boot-Verifizierung. Der Integritätsreferenzwert (ICV1_ref) wird zur Verifizierung der Integrität der Schicht 1 verwendet. Bei erfolgreicher Verifizierung wird die nächste Schicht zur weiteren Prüfung geladen.

In der zweiten Schicht 22 wird die Anwendersoftware 23 und die Messung der zweiten Boot-Schicht 25 gezeigt. Die Integrität wird durch den Vergleich des Integritätsprüfwertes (ICV_check) mit dem Referenzintegritätswert (ICV2_ref) überprüft.

Zusätzlich zu diesen Schritten umfasst das Verfahren 100 auch folgende Aspekte:
In der Konfigurationsphase der Geräteinheit 10 wird einmalig ein Integritätsreferenzwert für die ausführbare Funktion ermittelt und die Boot-Schichten werden mit diesem Wert verknüpft, um einen Integritätsstatus der ausführbaren Funktion bereitzustellen. Diese Phase wird in einer vertrauenswürdigen Umgebung ausgeführt. Die Betriebsphase hingegen findet in einer nicht vertrauenswürdigen Umgebung statt. Die OWF-Rechenfunktion unterscheidet die zwei Ergebniswerte durch einen Identifikator, und die Verwaltung der Ergebniswerte wird von einer geräteinternen Verwaltungseinheit ausgeführt. Der erste Ergebniswert der OWF-Rechenfunktion wird direkt an die nächste Schicht übertragen, während der zweite Ergebniswert innerhalb der ersten Boot-Schicht verbleibt. Der symmetrische Berechtigungsnachweis umfasst einen geheimen Schlüssel und wird zur Prüfung der Integrität der ersten Boot-Schicht der ausführbaren Funktion bereitgestellt. Die Messung der ersten Boot-Schicht und des ersten symmetrischen Berechtigungsnachweises dient als Eingabe für eine Berechnungsfunktion, um den Integritätsprüfwert zu berechnen. Diese Berechnungsfunktion umfasst mindestens eine HMAC-Funktion, eine MAC-Funktion, eine CMAC-Funktion und/oder eine AEAD-Funktion. Für jede weitere Boot-Schicht erfolgt die Durchführung der Schlüsselableitungsfunktion und die Verifizierung der Integrität der ausführbaren Funktion, indem der vorhergehende erste Ergebniswert (CDI-x) der vorhergehenden Boot-Schicht durch die OWF-Rechenfunktion verwendet wird, um einen symmetrischen Berechtigungsnachweis für die weitere Boot-Schicht zu berechnen und deren Integritätsprüfwert mit dem gespeicherten Referenz-Integritätsprüfwert (ICV_ref-x) zu vergleichen.

Der zweite Wert und das aus der Schlüsselableitungsfunktion resultierende Ergebnis werden nach der Berechnung des Integritätsprüfwertes aus der Speichervorrichtung 11 gelöscht. Der zweite Ergebniswert wird entfernt und die Schlüsselableitungsfunktion auf Grundlage des ersten Ergebniswertes ausgeführt. Die OWF-Rechenfunktion kann durch eine weitere Schlüsselableitungsfunktion ersetzt werden, deren Ergebnis direkt zur Berechnung des Integritätsprüfwertes für die weitere Boot-Schicht verwendet wird. Der Integritätsreferenzwert wird durch eine der folgenden Operationen ermittelt: HMAC-Operation, AEAD-Operation oder CMAC-Operationen. Dabei erfolgt die Ermittlung des Integritätsreferenzwertes unter Verwendung eines symmetrischen Schlüssels und der ermittelte Integritätsreferenzwert wird zusammen mit der ausführbaren Funktion gespeichert. Das Verfahren umfasst auch das Bereitstellen einer Meldung, wenn die Integritätsprüfung ein fehlerhaftes Ergebnis liefert, und/oder das Bereitstellen von Steuersignalen, die das Ausführen von Funktionen der Geräteinheit 10 oder das Starten der Geräteinheit 10 beenden, wenn die Integritätsprüfung ein fehlerhaftes Ergebnis beinhaltet.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

Unabhängig vom grammatikalischen Geschlecht eines bestimmten Begriffes sind Personen mit männlicher, weiblicher oder anderer Geschlechteridentität mit umfasst.

## Patentansprüche

1. Verfahren (100) zur Integritätsprüfung einer ausführbaren Funktion eines Gerätemoduls (10), umfassend die folgenden Verfahrensschritte:
Ausführen (110) einer OWF-Rechenfunktion, OWF_R, bei einem betriebsbedingten Starten des Gerätes (10), insbesondere in einer Betriebs-/Anwendungsphase, wobei die ausführbare Funktion in eine Vielzahl an Boot-Schichten unterteilt wird, und wobei ein einzigartiges Gerätegeheimnis, UDS, aus einer Speichervorrichtung (11) gelesen und als Eingabe für die OWF-Rechenfunktion verwendet wird, um zwei Ergebniswerte zu erzeugen: 1) einen ersten Ergebniswert für eine Schlüsselkette, CDI0, und 2) einen zweiten Ergebniswert für eine sichere Boot-Verifizierungskette, CDI_sec0;
Ermitteln (120) eines symmetrischen Berechtigungsnachweises, CDI_K0, durch ein Ausführen (130) einer Schlüsselableitungsfunktion, KDF, insbesondere einer DICE-Schlüsselableitungsfunktion, auf der Grundlage des zweiten Wertes, und
Verwenden (140) des symmetrischen Berechtigungsnachweises zur Prüfung der Integrität einer ersten Boot-Schicht der ausführbaren Funktion durch Berechnung eines Integritätsprüfwertes, ICV_check, wobei der ICV_check mit einem Integritätsreferenzwertes, ICV_ref, verglichen wird und bei einer Übereinstimmung eine weitere Boot-Schicht zur Prüfung geladen wird, andernfalls ein fehlerbehaftetes Ergebnis für die Integrationsprüfung bereitgestellt wird.

2. Verfahren nach Anspruch 1, wobei zur Integrationsprüfung in einer Konfigurationsphase des Gerätemoduls (10) einmalig folgende Verfahrensschritte ausgeführt werden:
Ermitteln wenigstens eines Integritätsreferenzwertes für die auf dem Gerätmodul (10) ausführbare Funktion während eines erstmaligen Startens des Gerätemoduls (10) in der Konfigurationsphase; und
Verknüpfen der Boot-Schichten der ausführbaren Funktion mit dem ermittelten Integritätsreferenzwert, um einen Integritätsstatus der ausführbaren Funktion bereitzustellen, und wobei die Konfigurationsphase in einer vertrauenswürdigen Umgebung ausgeführbar ist.

3. Verfahren nach einem der vorhergehenden Ansprüche, wobei die Betriebsphase in einer nicht vertrauenswürdigen Umgebung ausgeführt wird.

4. Verfahren nach einem der vorhergehenden Ansprüche, wobei die OWF-Rechenfunktion die zwei Ergebniswerte durch einen Identifikator unterscheidet und wobei die Verwaltung der Ergebniswerte von einer geräteinternen Verwaltungseinheit ausgeführt wird.

5. Verfahren nach einem der vorhergehenden Ansprüche, wobei der erste Ergebniswert der OWF-Rechenfunktion direkt an eine weitere Schicht übertragen wird und wobei der zweite Ergebniswert innerhalb der ersten Boot-Schicht verbleibt.

6. Verfahren nach einem der vorhergehenden Ansprüche, wobei der symmetrische Berechtigungsnachweis einen geheimen Schlüssel umfasst und zur Prüfung der Integrität der ersten Boot-Schicht der ausführbaren Funktion bereitgestellt wird.

7. Verfahren nach einem der vorhergehenden Ansprüche, wobei die Messung der ersten Boot-Schicht und des ersten symmetrischen Berechtigungsnachweises als Eingabe für eine Berechnungsfunktion verwendet werden, um den Integritätsprüfwert zu berechnen, und wobei die Berechnungsfunktion wenigstens eine der nachfolgenden Funktionen umfasst:
- eine HMAC-Funktion;
- eine MAC-Funktion; eine CMAC-Funktion;
- eine AEAD-Funktion.

8. Verfahren nach einem der vorhergehenden Ansprüche, wobei für jede weitere Boot-Schicht die Durchführung der Schlüsselableitungsfunktion und die Verifizierung der Integrität der ausführbaren Funktion erfolgt, indem als Eingabe für die Schlüsselableitungsfunktion der vorhergehende erste Ergebniswert, CDI-x, der vorhergehenden Boot-Schicht durch die OWF-Rechenfunktion verwendet wird, um einen symmetrischen Berechtigungsnachweis für die weitere Boot-Schicht zu berechnen und deren Integritätsprüfwert mit dem gespeicherten Referenz-Integritätsprüfwert, ICV_ref-x zu vergleichen.

9. Verfahren nach einem der vorhergehenden Ansprüche, wobei der zweite Wert und das aus der Schlüsselableitungsfunktion resultierende Ergebnis nach der Berechnung des Integritätsprüfwertes aus der Speichervorrichtung (11) gelöscht werden.

10. Verfahren nach einem der vorhergehenden Ansprüche, wobei der zweite Ergebniswert entfernt wird und die Schlüsselableitungsfunktion auf der Grundlage des ersten Ergebniswertes ausgeführt wird.

11. Verfahren nach einem der vorhergehenden Ansprüche, wobei die OWF-Rechenfunktion durch eine weitere Schlüsselableitungsfunktion ersetzt wird, und das Ergebnis der weiteren Schlüsselableitungsfunktion direkt zur Berechnung von Integritätsprüfwertes für die weitere Boot-Schicht verwendet wird.

12. Verfahren nach einem der vorhergehenden Ansprüche, wobei des Integritätsreferenzwertes ermittelt wird durch wenigstens eine der nachfolgenden Operationen:
- HMAC-Operation,
- AEAD-Operation,
- CMAC-Operationen; und
wobei das Ermitteln des Integritätsreferenzwertes unter Verwendung eines symmetrischen Schlüssels erfolgt; und wobei der ermittelte Integritätsreferenzwertes zusammen mit der ausführbaren Funktion gespeichert wird.

13. Verfahren nach einem der vorhergehenden Ansprüche, wobei das Verfahren ferner umfasst:
Bereitstellen einer Meldung, wenn die Integritätsprüfung ein fehlerbehaftetes Ergebnis beinhaltet, und/oder
Bereitstellen von Steuersignalen, die ein Ausführen von Funktionen des Gerätemoduls (10) oder das Ausführen/Starten des Gerätemoduls (10) beendet, wenn die Integritätsprüfung ein fehlerbehaftetes Ergebnis beinhaltet.

14. Vorrichtung (1) zur Integritätsprüfung einer ausführbaren Funktion eines Gerätemoduls (10) mit einer Schnittstelle (2) zur Kommunikation mit dem Gerätmodul (10) und einer Prozessoreinheit (3), wobei die Vorrichtung (1) ausgestaltet ist, um das Verfahren nach einem der vorhergehenden Verfahrensansprüche auszuführen.

15. Computerprogramm, wobei das Computerprogramm Befehle umfasst, die bei der Ausführung des Programms durch einen Computer diesen veranlassen, das Verfahren gemäß einem der vorhergehenden Verfahrensansprüche auszuführen.
